Europäisches Patentamt

European Patent Office

Office européen des brevets

(11) Veröffentlichungsnummer: **0 429 690 A1**

## (12) EUROPÄISCHE PATENTANMELDUNG

(21) Anmeldenummer: 89121816.6

(22) Anmeldetag: 25.11.89

(51) Int. Cl.5: **H01J 9/50**

(43) Veröffentlichungstag der Anmeldung:
**05.06.91 Patentblatt 91/23**

(84) Benannte Vertragsstaaten:
**AT BE CH DE ES FR GB GR IT LI LU NL SE**
**Patentblatt**

(71) Anmelder: **WVT TECHNISCHE ANLAGEN**
**GMBH**
**Ginsterweg 14**
**W-6940 Weinheim(DE)**

(72) Erfinder: **Rahi, Mikhael Dipl.-Ing.**
**Billstedter Mühlenweg 13**
**W-2000 Hamburg 74(DE)**

(74) Vertreter: **Ratzel, Gerhard, Dr.**
**Seckenheimer Strasse 36a**
**W-6800 Mannheim 1(DE)**

(54) Verfahren zur Entsorgung und/oder Rezyklisierung von Leuchtstofflampen und Glaszylindern.

(57) Verfahren zur Entsorgung und / oder zerstörungsfreien Rezyklisierung von Leuchtstofflampen
und Glaszylindern, das dadurch gekennzeichnet ist,
daß
    a) die Endstücke einschließlich der Endkappen
    der Lampen entfernt werden,
    b) die Glaszylinder gereinigt und
    c) als Rohlinge zur Herstellung von Leuchtstoff-
    Lampen benutzt werden.

EP 0 429 690 A1

# VERFAHREN ZUR ENTSORGUNG UND/ODER REZYKLISIERUNG VON LEUCHTSTOFFLAMPEN UND GLAS- ZYLINDERN

Die Erfindung betrifft ein Verfahren zur Entsorgung und/oder Rezyklisierung von Leuchtstofflampen und Glaszylindern.

Leuchtstofflampen haben generell eine begrenzte Einsatzdauer. Sie versagen nach einer bestimmten Lebensdauer den Dienst oder werden vorzeitig ausgewechselt, weil sie in ihrer Leuchtstärke nachgelassen haben infolge Ergrauens des Leuchtstoffes.

Leuchtstofflampen gehören zur Gattung der Endladungslampen. Sie enthalten verschiedene umweltrelevante Stoffe, unter anderem Quecksilber. Wenn sie mit dem normalen Hausmüll deponiert werden, gelangen die Inhaltsstoffe nach Zerstörung der Glaskörper in die Biosphäre. In der Bundesrepublik Deutschland sind daher Leuchtstofflampen als Sondermüll eingestuft, der nicht mit dem normalen Hausmüll entsorgt werden darf.

Verfahren zur Entsorgung von Leuchtstoff- und Gasdrucklampen unter Rückgewinnung bzw. Entsorgung des enthaltenen Quecksilbers und/oder des Glases und/oder der enthaltenen Leuchtstoffe (Selten Erdoxide, Selten Erdmischoxide) sind beschrieben.

So beschreibt die EP-A 0 248 198 eine Anlage zur Entsorgung von Leuchtstoff- und Gasdrucklampen, bei dem die Lampen in einem geschlossenen Gehäuse, das an einer Absaugvorrichtung angeschlossen ist, zerbrochen werden. Dabei werden die Bestandteile (Glas, metallische Bestandteile, nichtmetallische Bestandteile, Quecksilber, Leuchtstoffe) nach physikalischen Kriterien gegebenenfalls getrennt und als Rohstoffe wiedergewonnen.

Die deutsche Patentschrift DE-PS 36 09 517 betrifft ein Verfahren und eine Vorrichtung zum Entfernen von Quecksilber aus festen quecksilberhaltigen Materialien, bei denen die festen Körper zur Verdampfung des Quecksilbers erhitzt und das mit Quecksilber angereicherte Gas kondensiert wird. Das Verfahren arbeitet mit einer Vorrichtung, die einen Verdampferofen mit Kondensator beinhaltet. Dabei werden die quecksilberhaltigen Körper (beispielsweise Batterien, Lampen, Hochdruckbrenner oder dergleichen) vor Zugabe in den Ofenraum zerstört, zerdrückt oder geöffnet, um insbesondere das Quecksilber freizusetzen.

Die europäische Patentschrift EP-B 0 157 249 betrifft ein Verfahren zur Rückgewinnung von Selten-Erdoxid- und Selten Erdmischoxid-Leuchtstoffen von aus Leuchtstofflampen abgetrennten pulverförmigen Leuchtstoffgemischen, wobei die verschiedenen Komponenten chemisch gelöst werden.

Auch hierbei ist vorgesehen, die Bestandteile der Leuchtstofflampen, wie Kolbenenden und Glasrohr zu zerkleinern und dem Müll zuzuführen oder als Glasrohstoff zu verwenden.

Zum Stand der Technik ist weiterhin zu nennen die DE-OS 39 11 395, die ein Verfahren zur Rückgewinnung des Leuchtstoffes bzw. Leuchtstoffgemisches und des Quecksilbers von ausgebrannten bzw. nicht funktionsfähigen Leuchtstofflampen betrifft.

Dabei wird durch einen Ausblasvorgang der Leuchtstoff oder das Leuchtstoffgemisch gegebenenfalls Quecksilber erhalten.

Zum Stand der Technik für Rezyklisierungsverfahren von Leuchtstoffröhren sind weiterhin zu nennen der Artikel "Entsorgung von Sonderabfällen" in "Umweltplanung, Arbeits- und Umweltschutz", Heft Nr. 78, Februar 1989, Landesanstalt für Umwelt, Wiesbaden, Seite 71 bis 77 sowie der Artikel von F. Börchers, "Aufarbeitung von Leuchtstofflampeneine Alternative zur Deponie in "Bulletin des schweizerischen elektrotechnischen Vereins und des Verbandes schweizerischer Elektrizitätswerke" Band 78 (1987)(10) vom 23. Mai 1987, Seiten 571 bis 573.

Die nach dem Stand der Technik und Literatur bekannten Rezyklisierungsverfahrens sind zusammenfassend dadurch zu charakterisieren, daß sie zur Wiederverwendung des Lampenglases die Glaszylinder zerstören, um die gereinigten Glasscherben als Glasschrott wiedereinzusetzen. Sie unterscheiden sich voneinander dadurch, daß beispielsweise ein Teil der Verfahren die Lampen erst zerstört und das Glas dann reinigt und ein anderer Teil erst eine Reinigung der Glaszylinder durchführt und diese dann zu Scherben bricht.

Die Verfahren gemäß dem Stand der Technik beinhalten somit die Zerstörung des Glaszylinders der Leuchtstofflampen.

Gemäß diesen bisherigen Verfahren ist lediglich die Gewinnung von zerkleinerten Rohstoffen möglich, die aufwendige, energieintensive Wiederverwendungsverfahren erfordert.

Bisher ist es nicht möglich, diese Glaszylinder direkt wieder für die Lampenfertigung einzusetzen, weil bei Aufarbeitungsverfahren an den Lampenenden Kappen mit einem Teil des Glases abgetrennt werden.

Dadurch sind die verbleibenden Glaszylinder zu kurz, um daraus direkt wieder eine Lampe der ursprünglichen Länge zu fertigen. Deshalb werden die Glaszylinder zu Scherben gebrochen und wieder in eine Glasschmelze zurückgeführt.

Dabei ist zu beachten, daß an den Verschlußenden Bleiglas vorliegt und der Rest des Glaskörpers normales Glas, d. h. Natrium-Kalkglas für hohe Transparenz beinhaltet.

Demgegenüber liegt vorliegender Erfindung die Aufgabe zugrunde, ein Verfahren mit erhöhtem Rezyklisierungsgrad, weiterer Reduzierung des zu entsorgenden Müllvolumens und Minimierung des Energie-,Verfahrens- und technischen Aufwandes zur Rezyklisierung zu bewirken, durch Vermeidung des Weges über die Schmelze.

Diese Aufgabe wird erfindungsgemäß beim Verfahren der eingangs genannten Gattung dadurch gelöst,
daß
a) die Endstücke einschließlich der Endkappen der Lampen entfernt werden,
b) die Glaszylinder gereinigt und
c) als Rohlinge zur Herstellung von Leuchtstoff-Lampen benutzt werden.

Die Unteransprüche 2 bis 4 beinhalten besondere sführungsformen des erfindungsgemäßen Verfahren.

Das erfindungsgemäße Verfahren sieht jedoch vor, Glaszylinder von Leuchtstofflampen, die nach einem Verfahren gemäß Stand der Technik gereinigt wurden, nicht zu zerstören, sondern sie direkt wieder zu Leuchtstofflampen zu verarbeiten.

Beansprucht wird weiterhin die Verwendung erfindungsgemäßer rezyklisierter Glaszylinder zur Herstellung von Leuchtstofflampen.

Die Schritte a) und b) sind für sich sowie gemeinsam als solche bekannt mit dem Endprodukt Glasschrott zum erneuten Einsatz in der Glasschmelze.
Die Kombination der erfindungsgemäßen kennzeichnenden Verfahrensschritte bewirkt ein sprunghaft verbessertes Rezyklisierungsverfahren.

Das vorliegende Verfahren zur Herstellung von Glaszylindern aus ausgedienten Leuchtstofflampen und Herstellung neuer Leuchtstofflampen daraus beinhaltet, nach dem Brechen des Vakuums die Abtrennung der Endkappen ausgedienter Leuchtstofflampen,
die Reinigung der Glaszylinder und danach die Wiederverwendung als Rohlinge zur Herstellung neuer Lampen.
Bei dem erfindungsgemäßen Aufarbeitungsverfahren für ausgediente Leuchtstofflampen werden in einem oder mehreren Schritten Glaszylinder mit den Abmessungen produziert, die den Einsatz als Rohlinge für die Fertigung neuer Leuchtstofflampen gestatten.

Es werden somit Leuchtstofflampen aus Glaszylindern gefertigt, die in einem Aufarbeitungsverfahren aus ausgedienten Leuchtstofflampen gewonnen wurden.

Es gibt beim erfindungsgemäßen Verfahren folgende Wege zur Herstellung von Glas-Rohlingen:
Gereinigte Glaszylinder ausgedienter Leuchtstofflampen dienen zur Fertigung neuer Lampen, indem beispielsweise längere Verschlußenden verwendet werden, um die beim Aufarbeitungsprozeß der ausgedienten Lampen verlorenen Glaszylinderlängen auszugleichen zur ursprünglichen Normlänge bzw. Baulänge oder einer gewünschten Lampenlänge.

Gereinigte Glaszylinder ausgedienter Leuchtstofflampen werden benutzt, um daraus Lampen kürzerer Baulänge bzw. Normlänge zu fertigen, als sie diejenigen Lampen aufweisen, aus denen die Glaszylinder gewonnen wurden.

Im Aufarbeitungsprozeß werden aus ausgedienten Leuchtstofflampen entweder zunächst möglichst lange Glaszylinder gewonnen, diese anschließend auf die für eine kürzere Baulänge erforderlichen Maße gekürzt und die abgeschnittenen sauberen Glaszylinderenden, (ein- oder zweiseitig) als Glasschrott oder dergleichen einer Glasschmelze oder sonstigen Rezyklisierung zugeführt.

Oder ausgediente Leuchtstofflampen werden beispielsweise im Aufarbeitungsprozeß direkt auf Glaszylinderlängen gekürzt, die zur Fertigung einer neuen Lampe benutzt werden.

Wie oben ausgeführt, sind nach dem Stand der Technik Verfahren bekannt zur Volumenreduzierung und Ablagerung der kleingeschredderten Lampenbestandteile als Sonderabfall und zur Rezyklisierung von Lampenbestandteilen zwecks Wiederverwendung.

Das erfindungsgemäße Verfahren sieht nun vor, bei der Aufarbeitung ausgedienter Leuchtstofflampen in einem oder mehreren Schritten Glaszylinder in der Weise zu gewinnen, daß daraus wieder Leuchtstofflampen gefertigt werden können.
Dies ist auf zwei Wegen möglich, einerseits indem an den bei der Aufarbeitung gewonnenen Glaszylindern-Verschlußenden der Länge aufgebracht werden, daß die neugefertigte Lampe die ursprüngliche Länge der ausgedienten Lampe wieder erreicht oder indem beim Aufarbeitungsverfahren in einem oder mehreren Schritten Glaszylinder hergestellt werden, aus denen eine oder mehrere Lampen kürzerer Längen produziert werden, als sie der Länge der ausgedienten Lampe entspricht.
Beispielsweise werden aus dem Glaszylinder einer ausgedienten Lampe von 1,50 m Länge eine neue Lampe von 1,20 m oder 2 Lampenstücke von je 0,60 m gefertigt.
Oder es wird der Glaszylinder einer ursprünglichen 1,20 m Lampe für eine neue Lampe von 1,00 oder 0,60 m Länge verwendet.

Gereinigte Glaszylinder ausgedienter Leuchtstofflampen werden beispielsweise benutzt, um daraus Lampen kürzerer Baulänge zu fertigen als sie die Lampe besaß, aus der der Glaszylinder gewonnen wurde.

Zunächst werden möglichst lange gereinigte Glaszylinder im Aufarbeitungsprozeß gewonnen. Diese werden anschließend gekürzt auf die für eine kürzere Lampenlänge erforderliche Länge. Die abgeschnittenen Reste werden als Glasschrott einer Glasschmelze zugeführt.

**Ansprüche**

1. Verfahren zur Entsorgung und / oder zerstörungsfreien Rezyklisierung von Leuchtstofflampen und Glaszylindern, dadurch gekennzeichnet, daß
    a) die Endstücke einschließlich der Endkappen der Lampen entfernt werden,
    b) die Glaszylinder gereinigt und
    c) als Rohlinge zur Herstellung von Leuchtstoff-Lampen benutzt werden.

2. Verfahren nach Ansprüchen 1,
dadurch gekennzeichnet,
daß die Glaszylinder direkt in Schritt a) auf die für erneute Lampenherstellung erforderliche Länge zurecht geschnitten werden.

3. Verfahren nach Anspruch 1,
dadurch gekennzeichnet,
daß die gereinigten Glaszylinder weiter verkürzt werden zur Herstellung von Rohlingen für die Lampenfertigung.

4. Verfahren nach Ansprüchen 1 bis 3,
dadurch gekennzeichnet,
daß zur (Wieder)-Herstellung von Glaszylindern bzw. Leuchtstofflampen gewünschter Länge mindestens ein Endstück größerer Länge verwendet wird.

5. Verwendung rezyklisierter Glaszylinder gemäß Ansprüchen 1 bis 4 zur Herstellung von Leuchtstofflampen.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | PATENT ABSTRACTS OF JAPAN vol. 1, no. 6 () 14 März 77, & JP-A-51 121988 (TOKYO SHIBAURA DENKI K.K.) 25 Oktober 76, * das ganze Dokument * | 1, 5 | H01J9/50 |
| A | | 2, 3 | |
| | --- | | |
| Y | PATENT ABSTRACTS OF JAPAN vol. 1, no. 6 () 14 März 77, & JP-A-51 121989 (TOKYO SHIBAURA DENKI K.K.) 25 Oktober 76, * das ganze Dokument * | 1, 5 | |
| | --- | | |
| A | PATENT ABSTRACTS OF JAPAN vol. 1, no. 151 () 6 Dezember 77, & JP-A-52 94673 (HITACHI SEISAKUSHO K.K.) 9 August 77, * das ganze Dokument * | 1 | |
| | --- | | |
| D,A | BULLETIN DES SCHWEIZERISCHEN ELEKTROTECHNISCHEN VEREINS. vol. 78, no. 10, 23 Mai 87, ZURICH CH Seiten 571 - 573; F. BÖRCHERS: "Aufarbeitung von Leuchtstofflampen – eine Alternative zur Deponie" * Seite 572, rechte Spalte, Zeile 23 – Seite 573, linke Spalte, Zeile 38; Figur 1 * | 1 | RECHERCHIERTE SACHGEBIETE (Int. Cl.5 ) H01J |

Der vorliegende Recherchenbericht wurde für alle Patentansprüche erstellt

| Recherchenort | Abschlußdatum der Recherche | Prüfer |
|---|---|---|
| DEN HAAG | 29 JUNI 1990 | MARTIN Y VICENTE M. |